# EUROPÄISCHE PATENTSCHRIFT

(11) **EP 2 842 780 B1**
(45) Veröffentlichungstag und Bekanntmachung des Hinweises auf die Patenterteilung: **19.04.2017**
(21) Anmeldenummer: 14182276.7
(22) Anmeldetag: 26.08.2014
(51) Int. Cl.: B60K 5/12, B60K 11/04, B60K 13/04, E02D 3/02

(54) **Antriebsbaugruppe, insbesondere für eine Baumaschine, Unterbaugruppe für eine Antriebsbaugruppe und diese umfassende Baumaschine**
Drive assembly, especially for a construction machine, sub-assembly for a drive assembly and construction machine including the same
Module d'entraînement, en particulier pour un engin de construction, composant de sous-structure pour un module d'entraînement et engin de construction le comprenant

(30) Priorität: 30.08.2013 DE 102013217368
(43) Veröffentlichungstag der Anmeldung: 04.03.2015
(73) Patentinhaber: Hamm AG, 95643 Tirschenreuth (DE)
(72) Erfinder: Golbs, Markus, 95654 Weiden (DE); Zimmerer, Michael, 95505 Immenreuth (DE)
(74) Vertreter: RLTG

(56) Entgegenhaltungen:
- EP-A2- 1 968 813
- WO-A1-2007/040820
- WO-A1-2011/007235
- WO-A1-2011/058974
- DE-A1- 10 206 551
- DE-A1-102008 019 884
- DE-U1- 29 805 539
- US-A1- 2012 138 379

## Beschreibung

Die vorliegende Erfindung betrifft eine Antriebsbaugruppe, insbesondere für eine Baumaschine, umfassend ein Antriebsaggregat mit einer Mehrzahl von ersten Befestigungsbereichen zur Festlegung an einem Maschinenrahmen und wenigstens eine mit dem Antriebsaggregat zusammenwirkende Funktionseinheit und dieser zugeordnet einen Funktionseinheitenträger. Ferner betrifft die vorliegende Erfindung eine Unterbaugruppe, die vorzugsweise in einer derartigen Antriebsbaugruppe zum Einsatz gelangen kann, sowie eine Baumaschine, die eine derartige Antriebsbaugruppe bzw. Unterbaugruppe umfasst, gemäß dem Oberbegriff des Anspruchs 1.

Aus der DE 10 2011 005 275 A1 ist eine als selbstfahrender Bodenverdichter ausgebildete Baumaschine bekannt. Eine Antriebsbaugruppe dieser Baumaschine umfasst als zentralen Systembereich ein turbogeladenes Dieselantriebsaggregat, an welchem eine in Form einer Kühleranordnung bereitgestellte Funktionseinheit für das Antriebsaggregat vermittels eines als Vormontagerahmen ausgeführten Funktionseinheitenträgers am Antriebsaggregat festgelegt ist. Die mit weiteren Systembereichen, wie z. B. einem Abgasführungssystem aufgebaute Antriebsbaugruppe ist in ihrer Gesamtheit an einem Maschinenrahmen dieser Baumaschine festgelegt.

Insbesondere als Brennkraftmaschinen ausgeführte Antriebsaggregate führen aufgrund der periodisch auftretenden Zündungen und der dadurch hervorgerufenen Translationsbewegungen bzw. auch Rotationsbewegungen verschiedener Komponenten derselben zu Schwingungsanregungen, welche hohe mechanische und akustische Belastungen generieren. Um dem entgegenzutreten, ist es bekannt, eine derartige Antriebsbaugruppe über dämpfend bzw. elastisch wirksame Befestigungsbereiche am Maschinenrahmen festzulegen. Auch ist es bekannt, zwischen verschiedenen Bauteilen oder Unterbaugruppen einer derartigen Antriebsbaugruppe elastisch wirkende Verbindungselemente vorzusehen. Während aufgrund der Dämpfungseigenschaften derartig elastisch wirksamer Elemente bei geeigneter Abstimmung auf die anregenden Frequenzen eine gewisse Dämpfung erzeugt werden kann, ist es praktisch nicht möglich, bei den miteinander verbundenen Bauteilen bzw. Unterbaugruppen einer derartigen Antriebsbaugruppe gezielt in einzelnen der insgesamt sechs Bewegungsfreiheitsgrade (drei translatorische Freiheitsgrade und drei rotatorische Freiheitsgrade) eine Schwingungsentkopplung bzw. Frequenzverstimmung zu erreichen.

Aus der WO2007/077491 A2, in der die Merkmale des Oberbegriffs von Anspruch 1 enthalten sind, ist ein landwirtschaftlicher Traktor mit einer Antriebsbaugruppe bekannt. Bei dieser Antriebbaugruppe ist an einem Maschinenrahmen ein Kühler in seinem unteren Bereich angebracht. In seinem oberen Bereich trägt der Kühler um eine Schwenkachse schwenkbar zwei Funktionseinheitenträger, an welchen jeweilige Funktionseinheiten, insbesondere ein Ladeluftkühler und ein Luftfilter, getragen sind. Durch Verschwenkung der beiden Funktionseinheitenträger um ihre gemeinsame Schwenkachse werden die daran getragenen Funktionseinheiten zur Durchführung von Montage- bzw. Wartungsarbeiten leicht zugänglich. Eine zwei Ölkühler umfassende Baugruppe ist mit einem der Funktionseinheitenträger einerseits und bezüglich eines Maschinenrahmens andererseits schwenkbar getragen.

Es ist die Aufgabe der vorliegenden Erfindung, eine Antriebsbaugruppe, insbesondere für eine Baumaschine, eine Unterbaugruppe für eine Antriebsbaugruppe sowie eine Baumaschine bereitzustellen, mit welchen bei baulich einfach zu realisierender und mechanisch hoch belastbarer Ausgestaltung eine verbesserte Schwingungsentkopplung erreicht werden kann.

Gemäß einem ersten Aspekt der vorliegenden Erfindung wird diese Aufgabe gelöst durch eine Antriebsbaugruppe, insbesondere für eine Baumaschine, gemäß Anspruch 1. Diese umfasst ein Antriebsaggregat mit einer Mehrzahl von ersten Befestigungsbereichen zur Festlegung an einem Maschinenrahmen und wenigstens eine mit dem Antriebsaggregat zusammenwirkende Funktionseinheit und dieser zugeordnet einen Funktionseinheitenträger.

Erfindungsgemäß ist dabei weiter vorgesehen, dass der Funktionseinheitenträger in einem Schwenkverbindungsbereich bezüglich des Antriebsaggregats um wenigstens eine Schwenkachse schwenkbar ist.

Um eine stabile Anbindung auch der mit den Antriebsaggregat zusammenwirkenden Funktionseinheiten innerhalb einer Baumaschine oder dergleichen zu gewährleisten, ist an wenigstens einem Funktionseinheitenträger, wenigstens ein zweiter Befestigungsbereich zur Festlegung an einem Maschinenrahmen vorgesehen.

Bei der vorangehend beschriebenen Ankopplung zweier Funktionseinheitenträger ist zum Erhalt eines in sich stabilen Aufbaus weiter vorgesehen, dass der zweite Funktionseinheitenträger mit dem Antriebsaggregat in wenigstens einem dritten Befestigungsbereich verbunden ist. Somit können die beiden Funktionseinheitenträger im Rahmen einer nachfolgend noch erläuterten Unterbaugruppe bereitgestellt werden.

Bei dem erfindungsgemäßen Aufbau einer Antriebsbaugruppe ist die Möglichkeit geschaffen, durch eine schwenkbare, d. h. gelenkige Ankopplung wenigstens eines Funktionseinheitenträgers eine rotatorische Entkopplung zwischen dem im Wesentlichen die Schwingungsanregungen erzeugenden Antriebsaggregat und diesem Funktionseinheitenträger bzw. der daran getragenen Funktionseinheit zu erzielen. Eine derartige Schwenkverbindung ist im Allgemeinen mechanisch hoch belastbar, realisiert im Gegensatz zu Dämpfungselementen translatorische Zwangsführungen, involviert gleichwohl nur geringe Reibmomente und führt daher zu einer wesentlichen Schwingungsentkopplung, wodurch eine deutliche Verminderung der mechanischen Belastung des Funktionseinheitenträgers bzw. der daran getragenen Funktionseinheit bzw. auch des Antriebsaggregats selbst erreicht wird.

Weiter ist vorgesehen, dass zwei Funktionseinheiten und diesen jeweils zugeordnete Funktionseinheitenträger vorgesehen sind, wobei wenigstens einer der Funktionseinheitenträger bezüglich des Antriebsaggregats um wenigstens eine Schwenkachse schwenkbar ist. Wenn beide bzw. alle Funktionseinheitenträger schwenkbar bzw. gelenkig angekoppelt sind, wird eine deutlich verbesserte Schwingungsentkopplung bzw. Frequenzverstimmung innerhalb der Antriebsbaugruppe mit entsprechender Minderung der mechanischen Belastung der so angekoppelten Systembereiche erzeugt.

Daher ist ferner vorgesehen, dass ein erster der Funktionseinheitenträger in einem ersten Schwenkverbindungsbereich mit dem Antriebsaggregat um eine erste Schwenkachse schwenkbar verbunden ist und ein zweiter der Funktionseinheitenträger mit dem ersten Funktionseinheitenträger in einem zweiten Schwenkverbindungsbereich um eine zur ersten Schwenkachse im Wesentlichen parallele zweite Schwenkachse schwenkbar verbunden ist. Mit diesem Aufbau wird eine Kette von schwenkbaren bzw. gelenkigen Verbindungen aufgebaut, was eine deutlich bessere Schwingungsentkopplung der darin vorgesehenen Systembereiche mit sich bringt.

Um im Bereich einer jeweiligen schwenkbaren bzw. gelenkigen Verbindung eine hinsichtlich der rotatorischen Freiheitsgrade optimierte Anbindung zu schaffen, wird vorgeschlagen, dass wenigstens ein Schwenkverbindungsbereich wenigstens einen Gelenkbereich mit wenigstens einem, vorzugsweise zwei, am meisten bevorzugt drei Rotationsfreiheitsgraden umfasst. Eine definierte Positionierung bzw. Anbindung eines jeweiligen Funktionseinheitenträgers kann dadurch gewährleistet werden, dass wenigstens ein Schwenkverbindungsbereich zwei in Richtung einer Schwenkachse dieses Schwenkverbindungsbereichs in Abstand zueinander angeordnete Gelenkbereiche umfasst. Selbst dann, wenn eine derartige Anbindung zwei in Abstand zueinander angeordnete Gelenkbereiche umfasst, können diese vorteilhafterweise so ausgebildet sein, dass sie eine Verschwenkbarkeit in zwei oder drei Rotationsfreiheitsgraden gewährleisten, so dass auch in einem jeweiligen Funktionseinheitenträger auftretende Verformungen nicht zu Zwängungen führen können, sondern bezüglich einer damit gekoppelten Komponente entkoppelt werden können.

Vorteilhafterweise umfasst dann, wenn in der vorangehend beschriebenen Art und Weise zwei Funktionseinheitenträger miteinander gekoppelt sind, der erste Schwenkverbindungsbereich oder/und der zweite Schwenkverbindungsbereich zwei Gelenkbereiche. Dies bedeutet, dass in zumindest einem dieser beiden Schwenkverbindungsbereiche eine Hauptschwenkachse vorgegeben ist, während beispielsweise der andere Schwenkverbindungsbereich mit nur einem Gelenkbereich und dieser beispielsweise mit drei Rotationsfreiheitsgraden ausgebildet sein kann. Auch in diesem Falle ist eine definierte Positionierung eines so angekoppelten Funktionseinheitenträgers gewährleistet.

Um eine stabile Anbindung auch der mit den Antriebsaggregat zusammenwirkenden Funktionseinheiten innerhalb einer Baumaschine oder dergleichen zu gewährleisten, wird vorgeschlagen, dass an dem zweiten Funktionseinheitenträger wenigstens ein, vorzugsweise eine Mehrzahl von zweiten Befestigungsbereichen zur Festlegung an einem Maschinenrahmen vorgesehen ist.

Wenigstens ein Befestigungsbereich kann wenigstens ein elastisches Befestigungsorgan umfassen. Derartige elastische Befestigungsorgane sind im Allgemeinen mit gummiartigem, also bei mechanischer Belastung elastisch verformbarem Material aufgebaut, dessen Verformungscharakteristik, also beispielsweise Elastizitätsmodul, an die zu erwartenden Schwingungsanregungen angepasst werden kann, um auch damit zu einer verbesserten Schwingungsdämpfungscharakteristik beizutragen.

Bei der erfindungsgemäß aufgebauten Antriebsbaugruppe kann eine Funktionseinheit eine Abgasführungskomponente, beispielsweise Schalldämpfer bzw. Partikelfilter, für das Antriebsaggregat umfassen. Ferner kann eine Funktionseinheit eine Kühleranordnung für das Antriebsaggregat umfassen, um das darin zirkulierende Kühlmittel im Betrieb zu kühlen.

Um die vorangehend angesprochene, im Bereich einer schwenkbaren Verbindung ermöglichte Relativbewegung eines jeweiligen Funktionseinheitenträgers bezüglich des Antriebsaggregats nicht zu behindern, wird vorgeschlagen, dass wenigstens eine Funktionseinheit mit dem Antriebsaggregat über eine flexible Kopplungsanordnung, vorzugsweise Leitungsverbindung, zusammenwirkt.

Eine Unterbaugruppe für eine Antriebsbaugruppe mit dem erfindungsgemäßen Aufbau kann umfassen:
- einen an einem Antriebsaggregat festzulegenden Antriebsaggregatträger,
- einen ersten Funktionseinheitenträger für eine erste Funktionseinheit für das Antriebsaggregat, wobei der erste Funktionseinheitenträger mit dem Antriebsaggregatträger in einem ersten Schwenkverbindungsbereich um eine erste Schwenkachse schwenkbar verbunden ist,
- einen zweiten Funktionseinheitenträger für eine zweite Funktionseinheit für das Antriebsaggregat, wobei der zweite Funktionseinheitenträger mit dem ersten Funktionseinheitenträger in einem zweiten Schwenkverbindungsbereich um eine zur ersten Schwenkachse im Wesentlichen parallele zweite Schwenkachse schwenkbar verbunden ist und in einem Befestigungsbereich mit dem Antriebsaggregatträger vorzugsweise vermittels wenigstens eines elastischen Befestigungsorgans verbunden ist.

Bei einer derartigen Unterbaugruppe kann vorgesehen sein, dass wenigstens ein Schwenkverbindungsbereich wenigstens einen Gelenkbereich mit wenigstens einem, vorzugsweise zwei, am meisten bevorzugt drei Rotationsfreiheitsgraden umfasst.

Eine derartige Unterbaugruppe kann beispielsweise auch mit den an den jeweiligen Funktionseinheitenträgern zu tragenden Funktionseinheiten vormontiert werden und dann beispielsweise durch Anbinden des Antriebsaggregatträgers an das Antriebsaggregat angekoppelt werden. Ist diese Anbindung starr, beispielsweise durch Verschraubung ausgeführt, so ist in schwingungstechnischer Hinsicht der Antriebsaggregatträger innerhalb der Antriebsbaugruppe dann als Systembereich des Antriebsaggregats zu betrachten.

Gemäß einem weiteren Aspekt wird die eingangs genannte Aufgabe gelöst durch eine Baumaschine, insbesondere Bodenverdichter, umfassend einen Baumaschinenrahmen und eine erfindungsgemäß aufgebaute Antriebsbaugruppe. In dieser Baumaschine ist das Antriebsaggregat mit den ersten Befestigungsbereichen am Baumaschinenrahmen befestigt. Ferner ist wenigstens ein Funktionseinheitenträger mit wenigstens einem zweiten Befestigungsbereich am Baumaschinenrahmen befestigt.

Die vorliegende Erfindung wird nachfolgend mit Bezug auf die beiliegenden Figuren detailliert beschrieben. Es zeigt:
- Fig. 1: eine perspektivische Darstellung einer Antriebsbaugruppe;

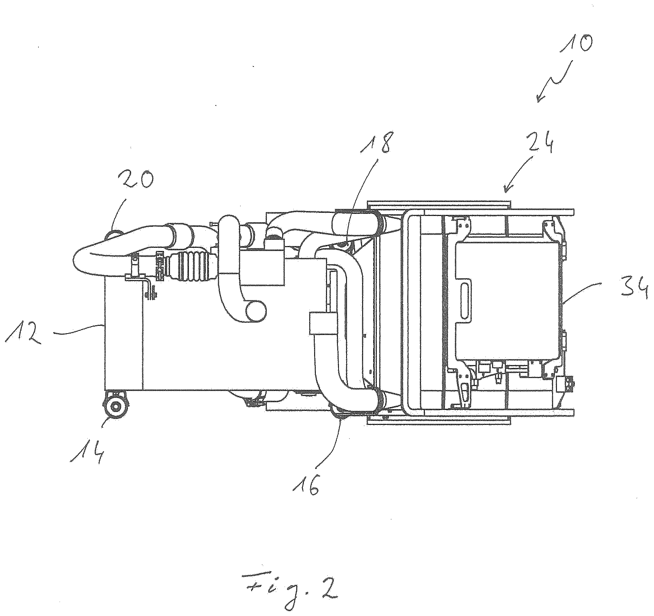

- Fig. 2: eine Draufsicht der Antriebsbaugruppe der Fig. 1;

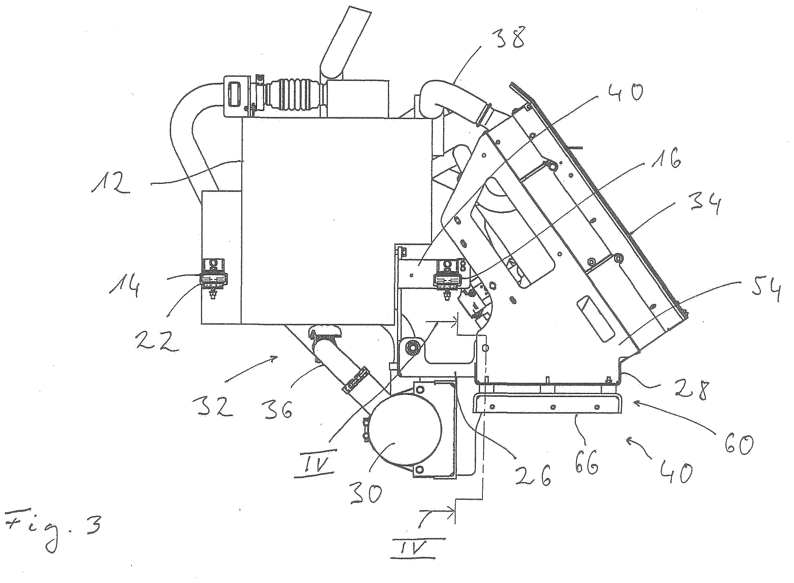

- Fig. 3: eine Seitenansicht der Antriebsbaugruppe der Fig. 1;
- Fig. 4: eine Teil-Querschnittansicht der Antriebsbaugruppe der Fig. 1, geschnitten längs einer Linie IV-IV in Fig. 3;
- Fig. 5: eine perspektivische Ansicht einer Unterbaugruppe der Antriebsbaugruppe der Fig. 1;
- Fig. 6: eine Detail-Schnittansicht eines im Kreis VI in Fig. 5 dargestellten Gelenkbereichs der Antriebsbaugruppe der Fig. 1.

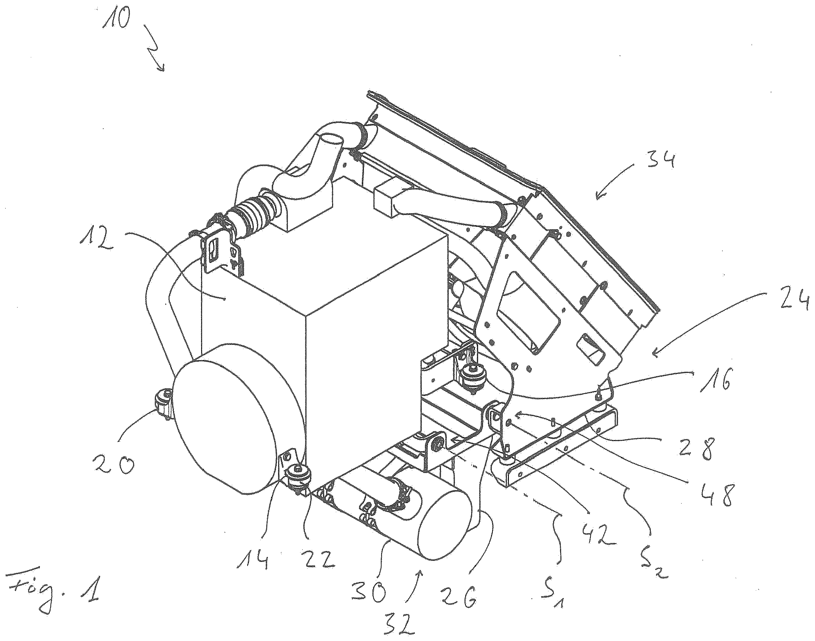

Die in Fig. 1 in perspektivischer Ansicht dargestellte Antriebsbaugruppe 10 für eine Baumaschine, beispielsweise einen im Straßenbau oder dergleichen einsetzbaren selbstfahrenden Bodenverdichter, umfasst als zentralen Systembereich ein nur schematisch dargestelltes Antriebsaggregat 12. Dieses kann beispielsweise als turbogeladene Dieselbrennkraftmaschine ausgebildet sein. Die Antriebsleistung des Antriebsaggregats kann beispielsweise dazu genutzt werden, in einem in den Figuren nicht dargestellten Hydraulikpumpenbereich Druckfluid bereitzustellen, das in verschiedenen Hydraulikmotoren dann genutzt werden kann, um ein Antriebsdrehmoment zu generieren.

Das Antriebsaggregat 12 ist über mehrere erste Befestigungsbereiche 14, 16, 18, 20 an einem in den Figuren nicht dargestellten Maschinenrahmen einer derartigen Baumaschine festzulegen. Im dargestellten Beispiel sind dies vier jeweils in Eckbereichen des Antriebsaggregats 12 positionierte erste Befestigungsbereiche 14, 16, 18, 20. Um eine schwingungsentkoppelnde Anbindung an den Baumaschinenrahmen zu erreichen, ist vorzugsweise jeder dieser ersten Befestigungsbereiche mit einem elastischen Befestigungsorgan 22 ausgebildet. Die Schwingungsdämpfungscharakteristik dieser elastischen Befestigungsorgane 22, die durch Verschraubung einerseits an das Antriebsaggregat 12 und andererseits an den Maschinenrahmen angebunden werden können, kann an das im Betrieb generierte Schwingungsanregungsspektrum des Antriebsaggregats angepasst werden, um möglichst wenig Schwingung auf den Maschinenrahmen zu übertragen.

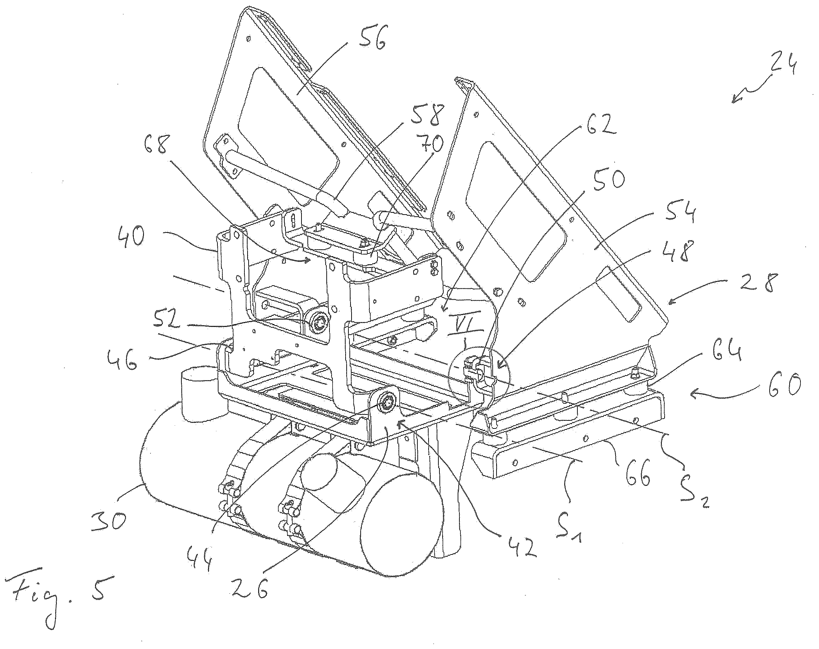

Die Antriebsbaugruppe 12 umfasst als weiteren Systembestandbereich eine in Fig. 5 deutlich dargestellte Unterbaugruppe 24. Diese Unterbaugruppe 24 umfasst zwei miteinander und mit dem Antriebsaggregat 12 schwenkbar verbundene Funktionseinheitenträger 26, 28. Am ersten Funktionseinheitenträger 26 ist als dem Antriebsaggregat 12 zugeordnete Funktionseinheit 30 ein Partikelfilter eines allgemein mit 32 bezeichneten Abgasführungssystems festgelegt. Am zweiten Funktionseinheitenträger 28 ist als Funktionseinheit 34 eine Kühleranordnung für das im Antriebsaggregat 12 zirkulierende Kühlmittel festgelegt. Beide Funktionseinheiten 30, 34 sind bezüglich des Antriebsaggregats über jeweilige zumindest bereichsweise flexible Verbindungsleitungen 36 bzw. 38 angebunden und somit funktional an das Antriebsaggregat 12 angekoppelt.

Die in Fig. 5 dargestellte Unterbaugruppe 24 umfasst ferner einen Antriebsaggregatträger 40. Dieser ist beispielsweise durch Verschraubung mit dem Antriebsaggregat 12, beispielsweise einem Motorblock desselben, fest zu verbinden und somit in schwingungstechnischer Hinsicht dem Antriebsaggregat 12 zuzuordnen.

In einem allgemein mit 42 bezeichneten ersten Schwenkverbindungsbereich ist das Antriebsaggregat 12 bzw. der daran festzulegende Antriebsaggregatträger 40 mit dem ersten Funktionseinheitenträger 26 durch zwei in Richtung einer ersten Schwenkachse S₁ in Abstand zueinander angeordnete Gelenkbereiche 44, 46 grundsätzlich um die erste Schwenkachse S₁ schwenkbar verbunden. Der erste Funktionseinheitenträger 26 ist in einem allgemein mit 48 bezeichneten zweiten Schwenkverbindungsbereich mit dem zweiten Funktionseinheitenträger 28 um eine zur ersten Schwenkachse S₁ vorzugsweise im Wesentlichen parallele zweite Schwenkachse S₂ schwenkbar verbunden. Auch der zweite Schwenkverbindungsbereich 48 umfasst zwei in Richtung der zweiten Schwenkachse S₂ in Abstand zueinander angeordnete Gelenkbereiche 50, 52.

Wie die Figuren zeigen, sind die beiden Schwenkachsen S₁ und S₂ so angeordnet, dass sie sich im Wesentlichen quer zur Antriebsbaugruppe 10 erstrecken. Da die Antriebsbaugruppe 10 im Allgemeinen so in eine Baumaschine eingebaut wird, dass die Richtung ihrer längsten Erstreckung der Längsrichtung einer derartigen Baumaschine entspricht, erstrecken sich die beiden Schwenkachsen S₁ und S₂ somit auch im Wesentlichen quer zur Längsrichtung einer derartigen Baumaschine. Dabei können diese beiden Schwenkachsen S₁ und S₂ näherungsweise auf dem gleichen horizontalen Niveau positioniert sein.

Der zweite Funktionseinheitenträger 28 kann zwei beispielsweise voneinander unabhängig aufgebaute Seitenrahmenbereiche 54, 56 umfassen, die miteinander durch einen beispielsweise rohrartig ausgebildeten Verbindungsrahmen 58 fest verbunden sind. Am zweiten Funktionseinheitenträger 28, beispielsweise jedem Seitenrahmenbereich 54, 56 desselben, ist ein jeweiliger zweiter Befestigungsbereich 60, 62 vorgesehen, mit welchen der zweite Funktionseinheitenträger 28 an dem nicht dargestellten Maschinenrahmen einer Baumaschine oder dergleichen festzulegen ist. Dabei kann jeder zweite Befestigungsbereich 60, 62 so aufgebaut sein, dass er ein- oder mehrere elastische Befestigungsorgane 64 umfasst. Im dargestellten Beispiel umfasst jeder zweite Befestigungsbereich 60, 62 drei in der Längsrichtung der Antriebsbaugruppe aufeinander folgend angeordnete elastische Befestigungsorgane 64. Diese können bezüglich des zweiten Funktionseinheitenträgers 28 und auch des Maschinenrahmens jeweils durch Verschrabung festgelegt sein. Insbesondere können die Befestigungsorgane 64 jedes zweiten Befestigungsbereichs 60, 62 über ein gemeinsames Anbindungselement 66 an den Maschinenrahmen angebunden werden. Durch die Elastizität der elastischen Befestigungsorgane 64 der zweiten Befestigungsbereiche 60, 62 erfolgt im Anbindungsbereich des zweiten Funktionseinheitenträgers 28 an den Maschinenrahmen eine Schwingungsdämpfung, so dass in diesem Bereich die in der Antriebsbaugruppe 12 generierten Schwingungsanregungen nur deutlich vermindert auf den Maschinenrahmen übertragen werden. Beispielsweise könnten die Befestigungsorgane 64 der zweiten Befestigungsbereiche 60, 62 baulich und auch hinsichtlich der Schwingungsdämpfungscharakteristik den Befestigungsorganen 22 der ersten Befestigungsbereiche 14, 16, 18, 20 entsprechen. Grundsätzlich können jedoch aufgrund der im Bereich des zweiten Funktionseinheitenträgers 28 vorhandenen anderen Masseverhältnisse auf diese anderen Masseverhältnisse abgestimmte und von den Befestigungsorganen 22 sich unterscheidende Befestigungsorgane 64 eingesetzt werden.

Der zweite Funktionseinheitenträger 28 ist in einem dritten Befestigungsbereich 68 mit dem Antriebsaggregatrahmen 40 verbunden. Der dritte Befestigungsbereich 68 umfasst mehrere, im dargestellten Beispiel zwei, elastische Befestigungsorgane 70, die einerseits bezüglich des Verbindungsrahmens 58 und somit des zweiten Funktionseinheitenträgers 28 und andererseits bezüglich des Antriebsaggregatrahmens 40 angebunden sein können. Hierzu können jeweilige plattenartige Bauteile des Verbindungsrahmens 58 einerseits und des Antriebsaggregatträgers 40 andererseits genutzt werden.

Die Befestigungsorgane 70 des dritten Befestigungsbereichs 68 koppeln den zweiten Funktionseinheitenträger 28 elastisch mit dem Antriebsaggregatträger 40 und somit auch dem Antriebsaggregat 12. Da der erste Funktionseinheitenträger 26 sowohl mit dem Antriebsaggregatträger 40 und damit auch dem Antriebsaggregat 12 als auch dem zweiten Funktionseinheitenträger 28 um die jeweiligen Schwenkachsen S₁ und S₂ grundsätzlich schwenkbar verbunden ist, besteht eine rotatorische Entkopplung des ersten Funktionseinheitenträgers 26 einerseits bezüglich des Antriebsaggregats 12 und andererseits bezüglich des zweiten Funktionseinheitenträgers 28, also der beiden Systembereiche, die in den ersten Befestigungsbereichen 14, 16, 18, 20 einerseits und den zweiten Befestigungsbereichen 60, 62 andererseits über jeweilige elastische Befestigungsorgane 22 bzw. 64 an den Maschinenrahmen angekoppelt sind. Diese rotatorische Entkopplung bezieht sich primär auf die durch die die jeweilige schwenkbare Ankopplung bereitstellenden Gelenkbereiche 44, 46 bzw. 50, 52 ermöglichte Schwenkbewegung. Dies wiederum erzeugt eine substantielle Schwingungsentkopplung des ersten Funktionseinheitenträgers 26 bezüglich des Antriebsaggregats 12 einerseits und bezüglich des zweiten Funktionseinheitneträgers 28 andererseits. Dieser wiederum ist aufgrund dieser doppelten schwenkbaren Verbindung einerseits und der elastischen Anbindung im dritten Befestigungsbereich 68 andererseits bezüglich des Antriebsaggregats selbst schwingungsentkoppelt.

Die verschiedenen Funktionseinheitenträger 26, 28 können aus mehreren beispielsweise durch Verschweißung oder Verschraubung oder Vernietung oder dergleichen fest verbundenen Bauteilen zusammengefügt sein. Grundsätzlich könnten derartige Träger jedoch auch aus einem integralen Materialstück beispielsweise durch Ausschneiden oder Ausstanzen und Umformen bereitgestellt sein.

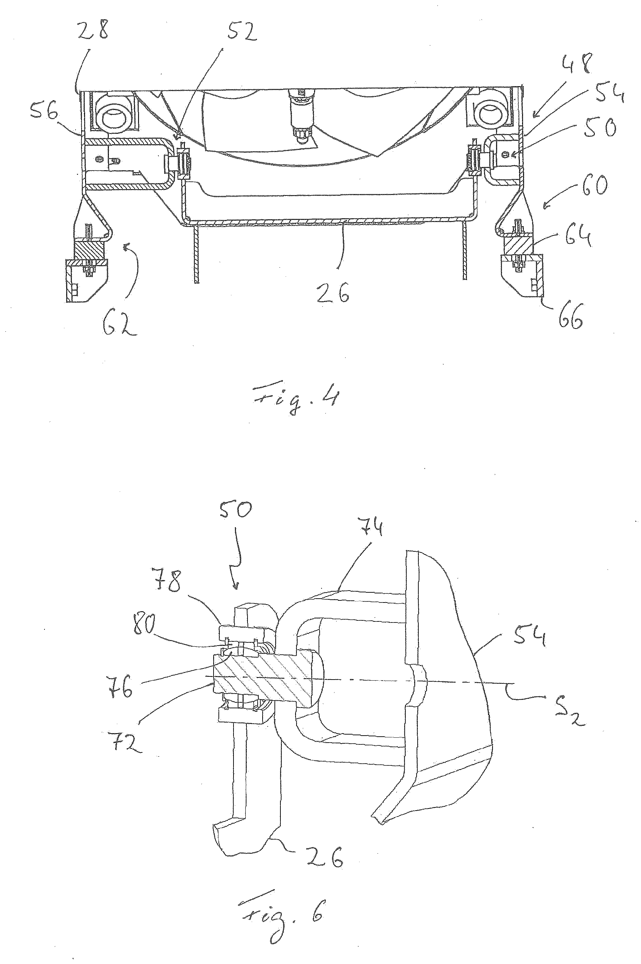

Die Fig. 6 zeigt ein Beispiel eines Gelenkbereichs. Insbesondere ist in Fig. 6 der Gelenkbereich 50 des zweiten Schwenkverbindungsbereichs 48 gezeigt. Es ist darauf hinzuweisen, dass auch die anderen Gelenkbereiche 44, 46 und 52 so aufgebaut sein können, wie der in Fig. 6 veranschaulichte Gelenkbereich 50.

Der Gelenkbereich 50 ist grundsätzlich als Gelenk mit drei Rotationsfreiheitsgraden aufgebaut. Ein Gelenkbolzen 72 ist über einen beispielsweise U-förmigen Träger 74 an den Seitenrahmen 54 des zweiten Funktionseinheitenträgers 28 angebunden. Mit dem Gelenkbolzen 72 ist eine Gelenkkugel 76 fest verbunden. Diese kann bezüglich des Gelenkbolzens 72 in dessen Längsrichtung axial festgelegt sein und kann mit diesem auch drehfest verbunden sein. Grundsätzlich könnte die Gelenkkugel 76 bezüglich des Gelenkbolzens 72 auch drehbar sein. Am ersten Funktionseinheitenträger 26 ist eine ringartig ausgebildete Gelenkschale 78 fest getragen. In der Gelenkschale 78 ist eine die Gelenkkugel 76 umgebende Gelenkpfanne 80 beispielsweise drehfest und auch gegen Verschiebung getragen. Grundsätzlich könnte die Gelenkpfanne 80 in der Gelenkschale 78 auch verdrehbar aufgenommen sein.

Die Gelenkpfanne 80 und die Gelenkkugel 76 wirken zum Bereitstellen eines Kugelgelenks zusammen. Insbesondere kann die Gelenkkugel 76 in der Gelenkpfanne 80 sich um die zweite Schwenkachse S₂ drehen. Des Weiteren ist eine Verschwenkung sowohl in horizontaler, als auch in vertikaler Richtung ermöglicht, so dass die Gelenkkugel 76 und die Gelenkpfanne 80 grundsätzlich in allen drei orthogonal zueinander stehenden Raumrichtungen bezüglich einander rotieren können, wenngleich in Zuordnung zumindest zwei dieser Raumrichtungen nur in begrenztem Winkel.

Während eine Relativbewegung der Gelenkkugel 76 bezüglich der Gelenkpfanne 80 um die zweite Schwenkachse S₂ im Wesentlichen dann auftritt, wenn der erste Funktionseinheitenträger 26 in seiner Gesamtheit bezüglich des zweiten Funktionseinheitenträgers 28 um diese zweite Schwenkachse S₂ verschwenkt, dienen die beiden anderen durch die Gelenkverbindungen 44, 46, 50, 52 bereitgestellten Rotationsfreiheitsgrade dazu, eine Entkopplung von in den einzelnen so gekoppelten Bauteilen selbst hervorgerufenen Verformungsbewegungen zu erzeugen. Auch derartige Verformungen könenn durch Schwingungsanregungen, diese beispielsweise ausgelöst durch die periodischen Zündungen bzw. Rotationsbewegungen und Linearbewegungen innerhalb des Antriebsaggregats 12, entstehen.

Durch die vorangehend beschriebene schwingungstechnische Entkopplung verschiedener Systembereiche der Antriebsbaugruppe 10 unter Einsatz von wenigstens einen, vorzugsweise eine Mehrzahl von Rotationsfreiheitsgraden einführenden Schwenkverbindungsbereichen wird die Schwingungsübertragung innerhalb der Antriebsbaugruppe 10 substantiell gemindert, so dass insbesondere in den vom Antriebsaggregat 12 entkoppelten Systembereichen die Belastung durch Schwingungsanregungen deutlich gemindert ist und damit auch die Gefahr von durch Schwingungsanregungen entstehenden Geräuschen. Auch ist die Gefahr der Weiterleitung von Schwingungen über derartige vom Antriebsaggregat entkoppelte Systembereiche deutlich gemindert.

Es ist darauf hinzuweisen, dass unter Ausnutzung des Grundprinzips der vorliegenden Erfindung, also der gelenkigen Verbindung von Systembereichen einer Antriebsbaugruppe 10, Variationen bei dem vorangehend beschriebenen Aufbau vorgenommen werden können. So könnte beispielsweise einer der Schwenkverbindungsbereiche, beispielsweise der erste Schwenkverbindungsbereich, mit nur einem einzigen Gelenkbereich ausgebildet sein. Aufgrund der Anbindung an einen weiteren Systembereich über zwei Gelenkbereiche, in diesem Falle im Bereich des zweiten Schwenkverbindungsbereichs, ist gleichwohl eine definierte Positionierung des in Frage stehenden Systembereichs, hier beispielsweise der erste Funktionseinheitenträger 26, gewährleistet. Des Weiteren ist es selbstverständlich möglich, einen oder mehrere der Schwenkverbindungsbereiche bzw. einen oder mehrere der Gelenkbereiche so auszugestalten, dass dort nicht nur eine Relativbewegbarkeit mit einem oder mehreren Rotationsfreiheitsgraden, sondern auch eine translatorische Relativbewegung der so gekoppelten Systembereiche möglich ist. So könnten beispielsweise einer oder mehrere der Schwenkverbindungsbereiche bzw. Gelenkbereiche so ausgebildet sein, dass grundsätzlich Bewegungen mit zwei rotatorischen Freiheitsgraden und einem translatorischen Freiheitsgrad möglich sind.

Es ist weiter darauf hinzuweisen, dass die vorangehend beschriebene Verbindung mit zwei Schwenkverbindungsbereichen auch ersetzt werden könnte, durch eine Verbindung, bei welcher nur ein Schwenkverbindungsbereich, beispielsweise der zweite Schwenkverbindungsbereich, vorgesehen ist, während im ersten Schwenkverbindungsbereich der erste Funktionseinheitenträger 26 beispielsweise starr oder über elastische Befestigungsorgane mit dem Antriebsaggregat 12 bzw. dem Antriebsaggregatträger 40 verbunden sein könnte. Auch könnte der Antriebsaggregatträger 40 unter Miteinbeziehung elastisch wirkender Befestigungsorgane oder elastischer Zwischenlagen am Antriebsaggregat 12 festgelegt sein.

## Patentansprüche

1. Antriebsbaugruppe, insbesondere für eine Baumaschine, umfassend ein Antriebsaggregat (12) mit einer Mehrzahl von ersten Befestigungsbereichen (14, 16, 18, 20) zur Festlegung an einem Maschinenrahmen und wenigstens eine mit dem Antriebsaggregat (12) zusammenwirkende Funktionseinheit (30, 34) und dieser zugeordnet einen Funktionseinheitenträger (26, 28), wobei der Funktionseinheitenträger (26, 28) in einem Schwenkverbindungsbereich (42, 48) bezüglich des Antriebsaggregats (12) um wenigstens eine Schwenkachse (S₁, S₂) schwenkbar ist, wobei zwei Funktionseinheiten (30, 34) und diesen jeweils zugeordnete Funktionseinheitenträger (26, 28) vorgesehen sind, wobei wenigstens einer der Funktionseinheitenträger (26, 28) bezüglich des Antriebsaggregats (12) um wenigstens eine Schwenkachse (S₁, S₂) schwenkbar ist,
**dadurch gekennzeichnet, dass** ein erster der Funktionseinheitenträger (26) in einem ersten Schwenkverbindungsbereich (42) mit dem Antriebsaggregat (12) um eine erste Schwenkachse (S₁) schwenkbar verbunden ist und ein zweiter der Funktionseinheitenträger (28) mit dem ersten Funktionseinheitenträger (26) in einem zweiten Schwenkverbindungsbereich (48) um eine zur ersten Schwenkachse (S₁) im Wesentlichen parallele zweite Schwenkachse (S₂) schwenkbar verbunden ist, dass der zweite Funktionseinheitenträger (28) mit dem Antriebsaggregat (12) in wenigstens einem dritten Befestigungsbereich (68) verbunden ist, und dass an wenigstens einem Funktionseinheitenträger (28) wenigstens ein zweiter Befestigungsbereich (60, 62) zur Festlegung an einem Maschinenrahmen vorgesehen ist.

2. Antriebsbaugruppe nach Anspruch 1,
**dadurch gekennzeichnet, dass** wenigstens ein Schwenkverbindungsbereich (42, 48) wenigstens einen Gelenkbereich (44, 46, 50, 52) mit wenigstens einem, vorzugsweise zwei, am meisten bevorzugt drei Rotationsfreiheitsgraden umfasst.

3. Antriebsbaugruppe nach Anspruch 2,
**dadurch gekennzeichnet, dass** wenigstens ein Schwenkverbindungsbereich (42, 48) zwei in Richtung einer Schwenkachse (S₁, S₂) dieses Schwenkverbindungsbereichs (42, 48) in Abstand zueinander angeordnete Gelenkbereiche (44, 46, 50, 52) umfasst.

4. Antriebsbaugruppe nach Anspruch 3,
**dadurch gekennzeichnet, dass** der erste Schwenkverbindungsbereich (42) oder/und der zweite Schwenkverbindungsbereich (48) zwei Gelenkbereiche (44, 46, 50, 52) umfasst.

5. Antriebsbaugruppe nach einem der Ansprüche 1 bis 4,
**dadurch gekennzeichnet, dass** an dem zweiten Funktionseinheitenträger (28) wenigstens ein, vorzugsweise eine Mehrzahl von zweiten Befestigungsbereichen (60, 62) zur Festlegung an einem Maschinenrahmen vorgesehen ist.

6. Antriebsbaugruppe einem der Ansprüche 1 bis 5,
**dadurch gekennzeichnet, dass** wenigstens ein Befestigungsbereich (14, 16, 18, 20, 60, 62, 68) wenigstens ein elastisches Befestigungsorgan (22, 64, 70) umfasst.

7. Antriebsbaugruppe nach einem der Ansprüche 1 bis 6,
**dadurch gekennzeichnet, dass** eine Funktionseinheit (30) eine Abgasführungskomponente für das Antriebsaggregat (12) umfasst oder/und dass eine Funktionseinheit (34) eine Kühleranordnung für das Antriebsaggregat (12) umfasst.

8. Antriebsbaugruppe nach einem der Ansprüche 1 bis 7,
**dadurch gekennzeichnet, dass** wenigstens eine Funktionseinheit (30, 34) mit dem Antriebsaggregat (12) über eine flexible Kopplungsanordnung (36, 38), vorzugsweise Leitungsverbindung, zusammenwirkt.

9. Baumaschine, insbesondere Bodenverdichter, umfassend einen Baumaschinenrahmen und eine Antriebsbaugruppe (10) nach einem der Ansprüche 1 bis 8, wobei das Antriebsaggregat (12) mit den ersten Befestigungsbereichen (14, 16, 18, 20) am Baumaschinenrahmen befestigt ist und wenigstens ein Funktionseinheitenträger (28) mit wenigstens einem zweiten Befestigungsbereich (60, 62) am Baumaschinenrahmen befestigt ist.

## Claims

1. Drive assembly, in particular for a construction machine, comprising a drive unit (12) with a plurality of first attachment regions (14, 16, 18, 20) for fixation at a machine frame, and at least one functional unit (30, 34) cooperating with the drive unit (12) and a functional unit carrier (26, 28) associated to the latter, wherein said functional unit carrier (26, 28) can, in a pivot connection region (42, 48) in relation to the drive unit (12) be pivoted about at least one pivot axis (S₁, S₂), wherein two functional units (30, 34) and functional unit carriers (26, 28) associated to the latter are provided, wherein at least one of the functional unit carriers (26, 28) can, in relation to the drive unit (12), be pivoted about at least one pivot axis (S₁, S₂),
**characterized in that** a first one of the functional unit carriers (26) is, in a first pivot connection region (42) connected to the drive unit (12) for pivoting about a first pivot axis (S₁) and a second one of the functional unit carriers (28) is, in a second pivot connection region (48) connected to the first functional unit carrier (26) for pivoting about a second pivot axis (S₂) which is substantially parallel to the first pivot axis (S₁), **in that** the second functional unit carrier (28) is, in at least a third attachment region (68) connected to the drive unit (12) and **in that** at least a second attachment region (60, 62) is provided at at least one functional unit carrier (28) for attachment at a machine frame.

2. Drive assembly according to claim 1,
**characterized in that** at least one pivot connection region (42, 48) comprises at least one hinge region (44, 46, 50, 52) with at least one, preferably two, mostly preferred three degrees of freedom of rotation.

3. Drive assembly according to claim 2,
**characterized in that** at least one pivot connection region (42, 48) comprises at least two hinge regions (44, 46, 50, 52) arranged at a distance from one another in the direction of a pivot axis (S₁, S₂) of said pivot connection region (42, 48).

4. Drive assembly according to claim 3,
**characterized in that** the first pivot connection region (42) or/and the second pivot connection region (48) comprises two hinge regions (44, 46, 50, 52).

5. Drive assembly according to one of claims 1 to 4,
**characterized in that** at least one, preferably a plurality of second attachment regions (60, 62) is provided at the second functional unit carrier (28) for fixation at a machine frame.

6. Drive assembly according to one of claims 1 to 5,
**characterized in that** at least one attachment region (14, 16, 18, 20, 60, 62, 68) comprises at least one elastic attachment element (22, 64, 70).

7. Drive assembly according to one of claims 1 to 6,
**characterized in that** a functional unit (30) comprises an exhaust gas guiding component for the drive unit (12) or/and **in that** a functional unit (34) comprises a cooler arrangement for the drive unit (12).

8. Drive assembly according to one of claims 1 to 7,
**characterized in that** at least one functional unit (30, 34) cooperates with the drive unit (12) via a flexible coupling arrangement (36, 38), preferably a line connection.

9. Construction machine, in particular a soil compactor, comprising a construction machine frame and a drive assembly (10) according to one of claims 1 to 8, wherein the drive unit (12) is attached to the construction machine frame with the first attachment regions (14, 16, 18, 20) and wherein at least one functional unit carrier (28) is attached to the construction machine frame with at least a second attachment region (60, 62).

## Revendications

1. Ensemble d'entraînement, en particulier pour une machine de construction, comprenant une unité d'entraînement (12) avec une pluralité de premières régions de fixation (14, 16, 18, 20) pour le fixage à un châssis de machine, et au moins une unité fonctionnelle (30, 34) coopérant avec l'unité d'entraînement (12) et associé à cette dernière un support d'unité fonctionnelle (26, 28), le support d'unité fonctionnelle (26, 28) étant, dans une région de connexion pivotante (42, 48), en relation à l'unité d'entraînement (12), pivotable autour au moins un axe de pivotement (S₁, S₂), deux unités fonctionnelles (30, 34) étant prévues avec des supports d'unité fonctionnelle (26, 28) associées et au moins un des supports d'unité fonctionnelle (26, 28) étant, en relation à l'unité d'entraînement (12), pivotable autour au moins un axe de pivotement (S₁, S₂),
**caractérisé en ce qu'**un premier des supports d'unité fonctionnelle (26) est, dans une première région de connexion pivotante (42), connecté à l'unité d'entraînement (12) de manière pivotable autour d'un premier axe de pivotement (S₁) et **en ce qu'** un deuxième des supports d'unité fonctionnelle (28) est, dans une deuxième région de connexion pivotante (48), connecté au premier support d'unité fonctionnelle (26) de manière pivotable autour d'un deuxième axe de pivotement (S₂) essentiellement parallèle au premier axe de pivotement (S₁), **en ce que** le deuxième support d'unité fonctionnelle (28) est connecté à l'unité d'entraînement (12) dans au moins une troisième région de connexion (68) et **en ce qu'**au moins une deuxième région de fixation (60, 62) est prévue à au moins un support d'unité fonctionnelle (28) pour le fixage à un châssis de machine.

2. Ensemble d'entraînement selon la revendication 1,
**caractérisé en ce qu'**au moins une région de connexion pivotante (42, 48) comprend au moins une région de connexion articulée (44, 46, 50, 52) avec au moins un, de préférence deux, de manière la plus préférée trois degrés de liberté.

3. Ensemble d'entraînement selon la revendication 2,
**caractérisé en ce qu'**au moins une région de connexion pivotante (42, 48) comprend deux régions de connexion articulée (44, 46, 50, 52) arrangées de manière espacée l'une de l'autre dans les sens d'un axe de pivotement (S₁, S₂) de cette région de connexion pivotante (42, 48).

4. Ensemble d'entraînement selon la revendication 3,
**caractérisé en ce que** la première région de connexion pivotante (42) ou/et la deuxième région de connexion pivotante (48) comprend deux régions de connexion articulée (44, 46, 50, 52).

5. Ensemble d'entraînement selon une des revendications 1 à 4, **caractérisé en ce qu'**au moins une, de préférence une pluralité de deuxièmes régions de fixation (60, 62) est prévue au deuxième support d'unité fonctionnelle (28) pour le fixage à un châssis de machine.

6. Ensemble d'entraînement selon une des revendications 1 à 5, **caractérisé en ce qu'**au moins une région de fixation (14, 16, 18, 20, 60, 62, 68) comprend au moins un membre de fixation élastique (22, 64, 70).

7. Ensemble d'entraînement selon une des revendications 1 à 6, **caractérisé en ce qu'**une unité fonctionnelle (30) comprend un composant de guidage des gaz d'échappement pour l'unité d'entraînement (12) ou/et qu'une unité fonctionnelle (34) comprend un arrangement de refroidisseur pour l'unité d'entraînement (12).

8. Ensemble d'entraînement selon une des revendications 1 à 7, **caractérisé en ce qu'**au moins une unité fonctionnelle (30, 34) coopère avec l'unité d'entraînement (12) via un arrangement d'accouplement flexible (36, 38), de préférence une connexion par conduite.

9. Machine de construction, de préférence un compacteur de sol, comprenant un châssis de machine de construction et un ensemble d'entraînement (10) selon une des revendications 1 à 8, l'unité d'entraînement (12) étant attachée au châssis de machine de construction avec les premières régions de fixation (14, 16, 18, 20) et au moins un support d'unité fonctionnelle (28) étant attachée au châssis de machine de construction avec au moins une deuxième région de fixation (60, 62).
